# EUROPÄISCHE PATENTANMELDUNG

(11) **EP 4 414 657 A1**
(43) Veröffentlichungstag der Anmeldung: **14.08.2024**
(21) Anmeldenummer: 23155632.5
(22) Anmeldetag: 08.02.2023
(51) Int. Cl.: G01B 5/012

(54) **MESSTASTER**

(71) Anmelder: Numerik Jena GmbH, 07751 Jena (DE)
(72) Erfinder: SULIK, Reinhard, 07747 Jena (DE)
(74) Vertreter: Hofmann, Ernst

(57) **Zusammenfassung**

Die Erfindung betrifft einen Messtaster (T), umfassend ein erstes Gehäuseteil (1) zum Umgreifen eines sich in einer Längsrichtung (x) erstreckenden Schaftes (3) und ein zweites Gehäuseteil (2). Die Erfindung ist dadurch gekennzeichnet, dass der Messtaster (T) mindestens eine erste form- und kraftschlüssige Verbindung zwischen dem ersten Gehäuseteil (1) und dem zweiten Gehäuseteil (2) aufweist, wobei die erste form- und kraftschlüssige Verbindung durch ein erstes Nut-Kontur-Paar (10) gebildet wird und die erste form- und kraftschlüssige Verbindung durch Umformen des zweiten Gehäuseteils (2) erzeugt ist.

## Beschreibung

### GEBIET DER TECHNIK

Die vorliegende Erfindung betrifft einen Messtaster nach dem Oberbegriff des Anspruchs 1.

### STAND DER TECHNIK

Im Stand der Technik ist der Einsatz von Schraubverbindungen zum Verbinden von zwei Gehäuseteilen eines Messtasters bekannt. Hierbei ist jedoch von Nachteil, dass zur Herstellung von Schraubverbindungen mehrere Bearbeitungsschritte notwendig sind, wie etwa das Bohren der Kernloch- und Senkbohrung, das Entgraten und gegebenenfalls das mehrfache Schneiden des Innengewindes. Nachteilhaft ist zudem dabei, dass beim Einsatz von Schraubverbindungen ein erhöhter Bedarf an Bauraum für den Schraubenschaft und Schraubenkopf eingeplant werden muss, was gerade bei kompakten Bauteilgruppen nicht immer möglich ist. Darüber hinaus bergen Schraubenverbindungen immer die Gefahr des unerwünschten Eintrags von Medien (wie z. B. Flüssigkeiten oder Gase) in das Innere einer Bauteilgruppe.

Eine Alternative hierzu ist das Verkleben von Gehäuseteilen bei Messtastern mit Hilfe eines Klebstoffs. Nachteilig hierbei ist jedoch, dass bei Klebeverbindungen die Kohäsions- und Adhäsionseigenschaften des Klebstoffs nachlassen können, beispielsweise durch Alterung oder ungünstige Temperaturen.

DE 31 20 492 A1 offenbart eine Messvorrichtung für mechanische Werkstücke mit einem Wegmessgerät. Die Messvorrichtung umfasst ein erstes und zweites Teil mit rechteckig-trapezförmigen Nuten für einen Dichtungsbalgen. Dieser Dichtungsbalgen dichtet das Wegmessgerät gegen äußere Einflüsse mithilfe einer Presspassung ab. Nachteilhaft an dieser Lösung ist unter anderem der erhöhte Fertigungsaufwand, welcher mit einer solchen Presspassung und dem Einhalten vorgegebener Toleranzen verbunden ist.

### ZUSAMMENFASSUNG DER ERFINDUNG

Aufgabe der vorliegenden Erfindung ist es, einen Messtaster zu schaffen, welcher kostengünstig in der Herstellung ist und eine möglichst geringe Bauteileanzahl umfasst.

Diese Aufgabe wird erfindungsgemäß durch die Merkmale der unabhängigen Ansprüche 1 und 11 gelöst. Vorteilhafte Ausgestaltungen und Weiterbildungen sind in den jeweils abhängigen Ansprüchen angegeben.

Der erfindungsgemäße Messtaster umfasst ein erstes Gehäuseteil zum Umgreifen eines sich in einer Längsrichtung (x-Richtung) erstreckenden Schaftes des Messtasters und ein zweites Gehäuseteil. Das erste Gehäuseteil und das zweite Gehäuseteil sind in einem Überlappungsbereich zumindest formschlüssig miteinander verbunden. Das erste Gehäuseteil umfasst mindestens eine im Überlappungsbereich angeordnete erste Nut. Das zweite Gehäuseteil umfasst mindestens eine mit der ersten Nut korrespondierende erste Kontur. Die erste Nut und die erste Kontur bilden ein erstes Nut-Kontur-Paar. Der Messtaster weist mindestens eine erste formund kraftschlüssige Verbindung zwischen dem ersten Gehäuseteil und dem zweiten Gehäuseteil auf. Die erste form- und kraftschlüssige Verbindung wird durch das erste Nut-Kontur-Paar gebildet. Die erste form- und kraftschlüssige Verbindung ist durch Umformen des zweiten Gehäuseteils erzeugt.

Beispielsweise erfolgt das Umformen durch eine örtliche plastische Werkstoffumformung wenigstens des zweiten Gehäuseteils im Bereich der ersten Nut.

Vorzugsweise dient der Schaft des Messtasters als Aufnahme für ein Tastelement. Der Schaft ist beispielsweise als Führung für einen Messbolzen ausgebildet. Das Tastelement umfasst beispielsweise den Messbolzen und einen mit dem Messbolzen verbundenen variablen Messeinsatz.

Beispielsweise ist das erste Gehäuseteil im Wesentlichen massiv ausgestaltet. Das zweite Gehäuseteil ist beispielsweise im Wesentlichen hohl mit einer Wandstärke von z. B. 0,25 mm bis 6 mm ausgestaltet. Das zweite Gehäuseteil kann auf das erste Gehäuseteil entlang der Längsrichtung (x-Richtung) aufgesteckt werden, so dass mehrere (d. h. wenigstens fünf) Freiheitsgrade gebunden sind. Die erste Nut wird beispielsweise durch Fräsen oder Drehen in das erste Gehäuseteil eingebracht. Die erste Kontur ist beispielsweise eine Presskontur.

Das erste Gehäuseteil, das zweite Gehäuseteil und der Schaft können aus Metall bzw. einer Legierung, insbesondere Aluminium oder Stahl, oder Kunststoff bestehen. Hierbei können entweder alle Bauteile ein identisches Material aufweisen, jedoch sind auch diverse Materialkombinationen denkbar.

Das erste Gehäuseteil kann auch als Führungshülse bezeichnet werden. Das zweite Gehäuseteil kann auch als Gehäusekappe bezeichnet werden.

Unter einer formschlüssigen Verbindung ist eine Verbindung zu verstehen, bei der wenigstens zwei Verbindungspartner (d. h. erstes und zweites Gehäuseteil) aneinander oder ineinander greifen, so dass ein Formschluss durch die geometrische Berührung der Wirkflächen erfolgt. Bei der formschlüssigen Verbindung blockiert somit ein Verbindungspartner die Bewegung des anderen, wobei die blockierende Wirkung bezüglich wenigstens einer Richtung erfolgt. Bei einer kraftschlüssigen Verbindung wird wenigstens eine Bewegung zweier Verbindungspartner (d. h. erstes und zweites Gehäuseteil) durch ein System reibbedingter Kräfte verhindert bzw. geregelt (Kraftschluss). Unter einer form- und kraftschlüssigen Verbindung wird eine Verbindung verstanden, bei der sowohl ein Formschluss als auch ein Kraftschluss vorliegt.

Gemäß einer vorteilhaften Weiterbildung der Erfindung erstreckt sich die erste Kontur in einer Höhenrichtung (z-Richtung) in die erste Nut hinein. Die erste Nut dient dabei als Negativ der ersten Kontur und gibt dieser wenigstens teilweise den Verlauf und die Form vor. Die erste Nut hat eine der ersten Kontur entsprechende Tiefe (in Höhenrichtung).

Beispielsweise erstreckt sich das erste Nut-Kontur-Paar über weniger als einen Millimeter oder alternativ bis zu mehrere Millimeter in Höhenrichtung (z-Richtung) in Richtung der ersten Nut und somit in Richtung einer (zentralen) Längsachse des Messtasters. Diese Ausgestaltung ermöglicht in vorteilhafter Weise eine nicht lösbare Verbindung zwischen dem ersten Gehäuseteil und dem zweiten Gehäuseteil.

In weiterer Ausgestaltung erstreckt sich das erste Nut-Kontur-Paar in einer Querrichtung (y-Richtung).

Mit Vorteil ist der erfindungsgemäße Messtaster zudem derart ausgestaltet, dass das erste Gehäuseteil eine im Überlappungsbereich angeordnete zweite Nut umfasst, wobei das zweite Gehäuseteil eine mit der zweiten Nut korrespondierende zweite Kontur umfasst. Die zweite Nut und die zweite Kontur bilden dabei ein zweites Nut-Kontur-Paar. Der Messtaster umfasst wenigstens eine durch das zweite Nut-Kontur-Paar gebildete zweite form- und kraftschlüssige Verbindung zwischen dem ersten Gehäuseteil und dem zweiten Gehäuseteil. Dabei ist die zweite form- und kraftschlüssige Verbindung ebenso durch Umformen des zweiten Gehäuseteils erzeugbar, beispielsweise durch eine örtliche plastische Werkstoffumformung wenigstens des zweiten Gehäuseteils im Bereich der zweiten Nut.

Eine weitere vorteilhafte Ausgestaltung der Erfindung sieht vor, dass das erste Nut-Kontur-Paar und das zweite Nut-Kontur-Paar auf in einer Höhenrichtung (z-Richtung) einander gegenüberliegenden Seiten oder Abschnitten des Messtasters angeordnet sind. Diese Anordnung der Nut-Kontur-Paare hat den Vorteil, dass Zug-, Druck- und Scherkräfte, die von außen auf den Messtaster einwirken, besser kompensiert werden können. Selbstverständlich können dabei auch mehr als ein Nut-Kontur-Paar je Seite bzw. Abschnitt vorgesehen sein.

Mit Vorteil umfasst der erfindungsgemäße Messtaster im ersten Gehäuseteil eine im Überlappungsbereich angeordnete Ringnut zur Aufnahme eines Dichtmittels, beispielsweise eines O-Rings, wobei sich die Ringnut in einer Umfangsrichtung (radiale Richtung in Bezug auf die Längsachse des Messtasters) abschnittsweise oder vollständig um das erste Gehäuseteil herum erstreckt. Das Dichtmittel ist hierbei zwischen dem ersten Gehäuseteil und dem zweiten Gehäuseteil angeordnet und dichtet das Innere des Messtasters gegen Medien (wie z. B. Flüssigkeiten oder Gase) ab.

Mit Vorteil ist dabei die Ringnut in Kombination mit dem Dichtmittel in Längsrichtung (x-Richtung) vor oder hinter dem ersten Nut-Kontur-Paar angeordnet. Für den denkbaren Fall, dass mehrere Nut-Kontur-Paare in Längsrichtung hintereinander angeordnet sind, kann die Ringnut in Kombination mit dem Dichtmittel derart angeordnet sein, dass diese vor dem vordersten oder hinter dem letzten Nut-Kontur-Paar liegt. Selbstverständlich kann die Ringnut aber auch zwischen zwei Nut-Kontur-Paaren liegen. Alternativ können auch mehrere Ringnuten mit je einem Dichtmittel vorgesehen sein, welche zwischen den in Längsrichtung (x-Richtung) hintereinander angeordneten mehreren Nut-Kotur-Paaren positioniert sein können.

Die erste Kontur und alternativ oder ergänzend die erste Nut können mit Vorteil jeweils einen halbrunden, rechteckigen, dreieckigen oder trapezförmigen Querschnitt haben.

Mit Vorteil ist die Erfindung derart ausgestaltet, dass das erste Gehäuseteil und der Schaft stoffschlüssig miteinander verbunden sind (z. B. durch Klebung), so dass eine nicht ohne Weiteres lösbare Verbindung zwischen dem Schaft und dem ersten Gehäuseteil ausgebildet ist.

In einer weiteren Ausgestaltung ist die erste Nut als geschlossene oder offene Nut ausgebildet. Unter einer offenen Nut ist eine Nut zu verstehen, welche keinen Nutauslauf besitzt. Eine offene Nut kann sich beispielsweise über die gesamte Umfangsrichtung des ersten Gehäuseteils erstrecken, so dass diese wieder in sich selbst mündet, wie es bei einer Ringnut in Umfangsrichtung der Fall ist. Unter einer geschlossenen Nut (d. h. nicht-offene Nut) ist eine Nut zu verstehen, welche sich nicht über die gesamte Umfangrichtung des ersten Gehäuseteils erstreckt. Eine geschlossene Nut besitzt somit an wenigstens einem Ende einen Nutauslauf, wobei dieser gerade und insbesondere unter einem Auslaufwinkel oder gekrümmt, insbesondere mit einem Auslaufradius, ausgebildet sein kann.

Ein Aspekt der Erfindung betrifft ein Verfahren zum Herstellen eines Messtasters. Es erfolgt ein Bereitstellen eines ersten Gehäuseteils mit mindestens einer ersten Nut und eines zweiten Gehäuseteils. Ferner erfolgt ein formschlüssiges Verbinden des ersten Gehäuseteils und des zweiten Gehäuseteils durch Aufstecken des zweiten Gehäuseteils in einer Längsrichtung (x-Richtung) auf das erste Gehäuseteil derart, dass ein Überlappungsbereich zwischen dem ersten Gehäuseteil und dem zweiten Gehäuseteil ausgebildet wird, und dass die erste Nut im Überlappungsbereich angeordnet ist. Darüber hinaus erfolgt ein form- und kraftschlüssiges Verbinden des ersten Gehäuseteils und des zweiten Gehäuseteils durch Umformen des zweiten Gehäuseteils derart, dass mindestens eine mit der ersten Nut korrespondierende erste Kontur gebildet wird, und dass die erste Nut und die erste Kontur ein erstes Nut-Kontur-Paar bilden.

Mit Vorteil erfolgt die form- und kraftschlüssige Verbindung derart, dass sich die erste Kontur in einer Höhenrichtung (z-Richtung) in die erste Nut hinein erstreckt.

In weiterer Ausgestaltung umfasst die form- und kraftschlüssige Verbindung vorteilhafterweise eine gezielte örtliche plastische Werkstoffumformung, beispielsweise mit zuvor durchgeführter Wärmebehandlung ((Halb-)Warmumformung) wenigstens im Überlappungsbereich oder ohne Wärmebehandlung (Kaltumformung).

Mit Vorteil umfasst das form- und kraftschlüssige Verbinden ein Verpressen oder Durchsetzfügen des zweiten Gehäuseteils mit dem ersten Gehäuseteil. Hierdurch können weitere Verbindungselemente wie Schrauben oder Nieten vermieden werden. Dies ist wiederum relativ kostengünstig.

In weiterer vorteilhafter Ausgestaltung kann das form- und kraftschlüssige Verbinden ein temporäres Einbringen mindestens eines Stempelelements zur Erzeugung der ersten Kontur umfassen. Hierbei wird ein Stempelelement zunächst auf Höhe der ersten Nut in das zweite Gehäuseteil eingesenkt und eine gerichtete Stempelkraft übertragen. Das zweite Gehäuseteil erfährt dabei eine gezielte örtliche plastische Werkstoffumformung, wobei das zweite Gehäuseteil in diesem Bereich gestreckt wird, wodurch sich die form- und kraftschlüssige Verbindung ausprägt.

Die vorliegende Erfindung ermöglicht einen Messtaster mit einer form- und kraftschlüssigen Verbindung zwischen zwei Gehäuseteilen sowie mit reduzierter Bauteileanzahl. Insbesondere kann bei der Herstellung des Messtasters durch Umformen die form- und kraftschlüssige Verbindung der beiden Gehäuseteile erzielt werden, wodurch ein kompakter Messtaster mit reduzierter Bauteilanzahl realisierbar ist.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

- Fig. 1: eine perspektivische Ansicht eines Messtasters gemäß einem Ausführungsbeispiel;
- Fig. 2: eine Draufsicht auf den Messtaster nach Fig. 1;
- Fig. 3: eine Schnittansicht gemäß Schnittlinie A-A in Fig. 2;
- Fig. 4: eine Seitenansicht des Messtasters nach Fig. 1 mit Indikatoren für die temporären Einbringorte eines Stempelelements zur Erzeugung der ersten und zweiten Kontur; und
- Fig. 5a-5c: beispielhafte Ausgestaltungen des zweiten Gehäuseteils mit jeweils unterschiedlicher erster Nut in perspektivischer Darstellung.

### BESCHREIBUNG DER AUSFÜHRUNGSFORMEN

Ein Ausführungsbeispiel der vorliegenden Erfindung wird im Folgenden unter Bezugnahme der Zeichnungen genauer beschrieben.

In den Figuren sind Koordinatensysteme gezeigt, die die Längsrichtung (x-Richtung), die Querrichtung (y-Richtung) und die Höhenrichtung (z-Richtung) angeben. Die Koordinatenachsen (x, y, z) der Koordinatensysteme liegen jeweils paarweise orthogonal zueinander.

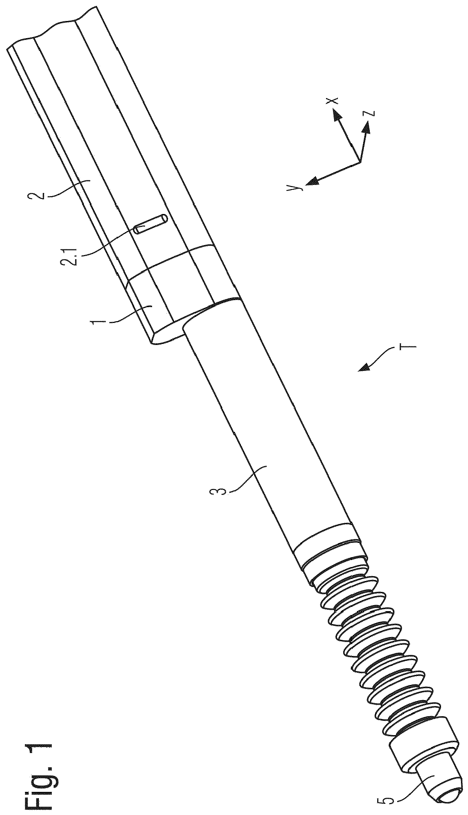

Fig. 1 zeigt in perspektivischer Darstellung einen Messtaster T mit einem zweiten Gehäuseteil 2, welches mittels einer ersten Kontur 2.1 form- und kraftschlüssig mit einem ersten Gehäuseteil 1 verbunden ist. Das erste Gehäuseteil 1 ist wiederum stoffschlüssig mit einem Schaft 3 verbunden, wobei der Schaft 3 zusätzlich über ein Tastelement 5 verfügt.

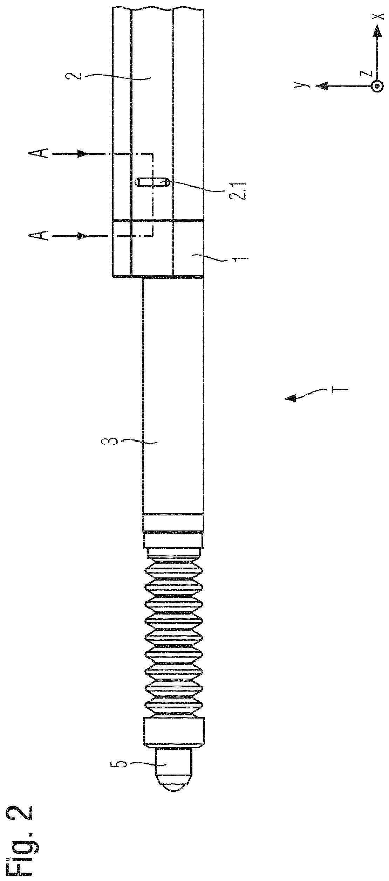

Fig. 2 zeigt den Messtaster T in Draufsicht, wobei sich die erste Kontur 2.1 in einem Überlappungsbereich des ersten Gehäuseteils 1 und des zweiten Gehäuseteils 2 sowie in Höhenrichtung z in den Messtaster T hinein erstreckt. Darüber hinaus verläuft die erste Kontur 2.1 entlang einer Querrichtung y.

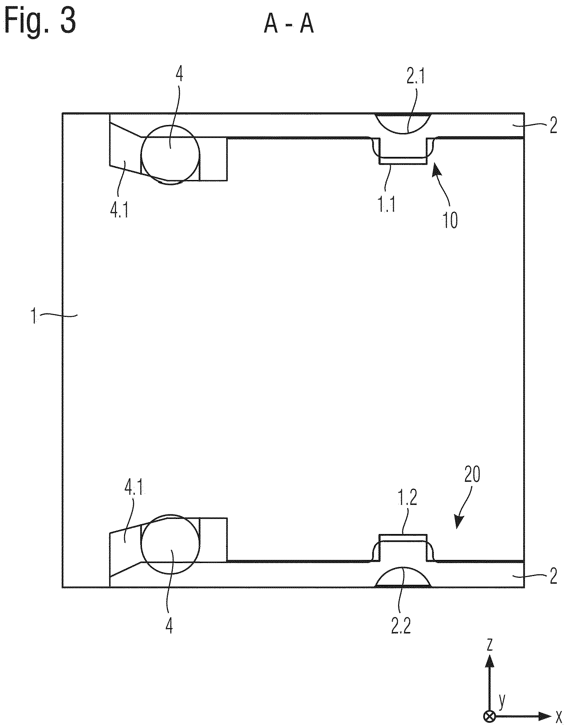

Fig. 3 zeigt eine Schnittansicht des Messtasters T entlang der Schnittlinie A-A aus Fig. 2. Das erste Gehäuseteil 1 umfasst eine erste Nut 1.1, welche sich entlang der Höhenrichtung z in den Messtaster T hinein erstreckt. Das zweite Gehäuseteil 2 umfasst die erste Kontur 2.1, welche sich form- und kraftschlüssig in die erste Nut 1.1 hinein erstreckt, so dass ein erstes Nut-Kontur-Paar 10 ausgebildet ist. Auf der in Höhenrichtung z gegenüberliegenden Seite des Messtasters T (bezüglich des ersten Nut-Kontur-Paars 10) ist eine zweite Nut 1.2 sowie eine zweite Kontur 2.2 ausgebildet, welche sich beide entlang der Höhenrichtung z in den Messtaster T hinein erstrecken und ebenfalls eine form- und kraftschlüssige Verbindung bilden. Die zweite Nut 1.2 und die zweite Kontur 2.2 bilden hierbei ein zweites Nut-Kontur-Paar 20 aus.

Zudem umfasst das erste Gehäuseteil 1 eine Ringnut 4.1 welche als geschlossene Nut ausgebildet ist und in Umfangsrichtung verläuft. Die Ringnut 4.1 dient als Aufnahme für ein Dichtmittel 4, beispielsweise einen O-Ring.

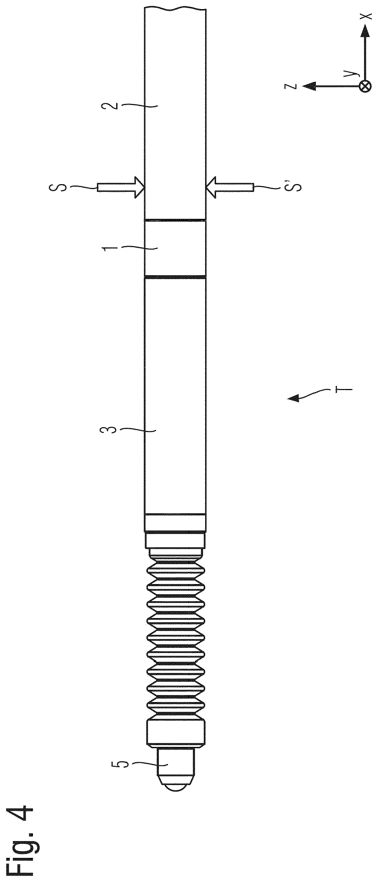

Fig. 4 zeigt jenen Verfahrensschritt, welcher zur Ausbildung der ersten Kontur 2.1 und der zweiten Kontur 2.2 dient. Hierbei wird je ein Stempelelement S, S' in den Bereich der ersten Nut 1.1 bzw. zweiten Nut 1.2 von außen derart temporär in das zweite Gehäusteteil 2 eingebracht, dass die erste Kontur 2.1 bzw. die zweite Kontur 2.2 ausgebildet wird und es zu einem Form- und Kraftschluss zwischen dem ersten Gehäuseteil 1 und dem zweiten Gehäuseteil 2 an der entsprechenden Stelle kommt. Hierbei kommt es zu einer örtlichen plastischen Werkstoffumformung des zweiten Gehäuseteils 2.

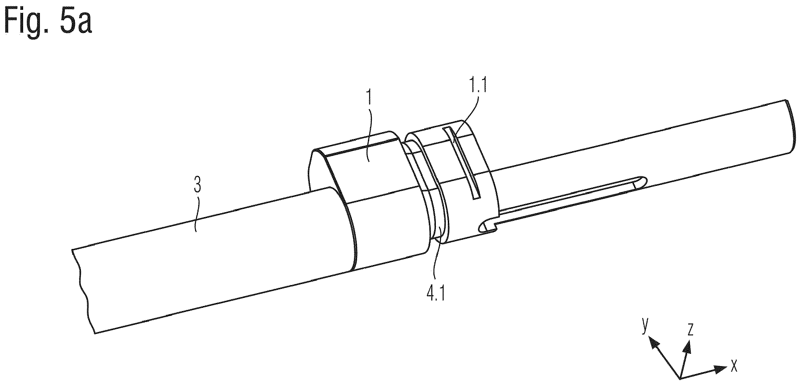

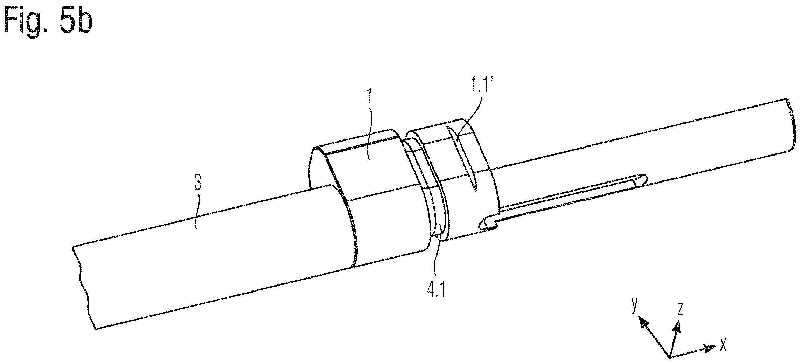

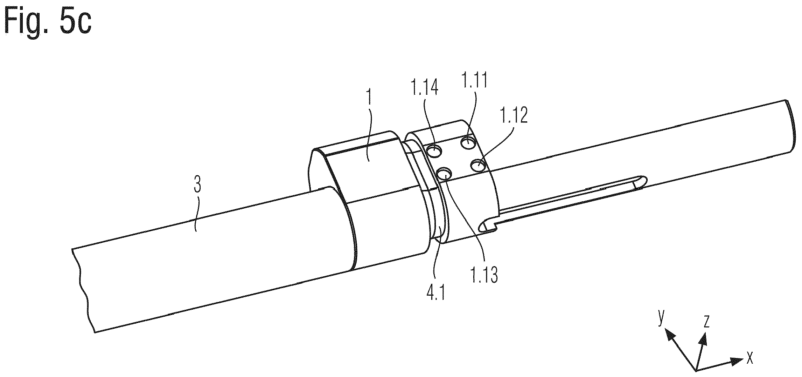

Die Figuren 5a-5c zeigen das erste Gehäuseteil 1 mit der ersten Nut 1.1 (Fig. 5a) sowie beispielhaften Abwandlungen derselben (im Folgenden erste Nut 1.1' gemäß Fig. 5b; erste Nut 1.11 gemäß Fig. 5c). Dabei ist die erste Nut beispielsweise mit einem rechteckigen Querschnitt (erste Nut 1.1 gemäß Fig. 5a), einem dreieckigen Querschnitt (erste Nut 1.1' gemäß Fig. 5b) oder als eine runde Bohrung (erste Nut 1.11 gemäß Fig. 5c) ausgebildet. Zusätzlich zur ersten Nut 1.11 gemäß Fig. 5c können weitere runde Bohrungen 1.12-1.14 vorgesehen sein. Die erste Nut 1.11 und die Bohrungen 1.12-1.14 bilden beispielsweise eine Gruppe in Form einer rechteckigen Konfiguration (vgl. Fig. 5c). Durch diese Gruppe in Verbindung mit einer korrespondierenden Kontur des zweiten Gehäuseteils 2 (nicht gezeigt) können weitere Nut-Kontur-Paare auf einer Seite des Messtasters T gebildet werden. Ergänzend kann die zweite Nut 1.2 bzw. eine weitere Gruppe identisch zur ersten Nut 1.1, 1.1', 1.11 bzw. zur vorgenannte Gruppe 1.11-1.14 ausgebildet sein (nicht dargestellt). Beispielsweise kann die zweite Nut 1.2 bzw. die weitere Gruppe auf der in Höhenrichtung z gegenüberliegenden Seite des Messtasters T (in Bezug auf die erste Nut 1.11, 1.1', 1.11 und die vorgenannte Gruppe 1.11-1.14) ausgebildet sein

## Patentansprüche

1. Messtaster (T) mit einem ersten Gehäuseteil (1) zum Umgreifen eines sich in einer Längsrichtung (x) erstreckenden Schaftes (3) des Messtasters (T) und mit einem zweiten Gehäuseteil (2),
wobei das erste Gehäuseteil (1) und das zweite Gehäuseteil (2) in einem Überlappungsbereich zumindest formschlüssig miteinander verbunden sind,
wobei das erste Gehäuseteil (1) mindestens eine im Überlappungsbereich angeordnete erste Nut (1.1; 1.1'; 1.11) umfasst, und
wobei das zweite Gehäuseteil (2) mindestens eine mit der ersten Nut korrespondierende erste Kontur (2.1) umfasst,
wobei die erste Nut (1.1; 1.1`; 1.11) und die erste Kontur (2.1) ein erstes Nut-Kontur-Paar (10) bilden,
**dadurch gekennzeichnet, dass**
der Messtaster (T) mindestens eine erste form- und kraftschlüssige Verbindung zwischen dem ersten Gehäuseteil (1) und dem zweiten Gehäuseteil (2) aufweist,
wobei die erste form- und kraftschlüssige Verbindung durch das erste Nut-Kontur-Paar (10) gebildet wird, und
die erste form- und kraftschlüssige Verbindung durch Umformen des zweiten Gehäuseteils (2) erzeugt ist.

2. Messtaster (T) nach Anspruch 1, **dadurch gekennzeichnet, dass** sich die erste Kontur (2.1) in einer Querrichtung (y) erstreckt und/oder dass sich die erste Kontur (2.1) in einer Höhenrichtung (z) in die erste Nut (1.1; 1.1'; 1.11) hinein erstreckt.

3. Messtaster (T) nach Anspruch 1 oder 2, **dadurch gekennzeichnet, dass** sich das erste Nut-Kontur-Paar (10) in einer Höhenrichtung (z) erstreckt.

4. Messtaster (T) nach einem der vorhergehenden Ansprüche, **dadurch gekennzeichnet, dass** das erste Gehäuseteil (1) eine im Überlappungsbereich angeordnete zweite Nut (1.2) umfasst, dass das zweite Gehäuseteil (2) eine mit der zweiten Nut (1.2) korrespondierende zweite Kontur (2.2) umfasst, dass die zweite Nut (1.2) und die zweite Kontur (2.2) ein zweites Nut-Kontur-Paar (20) bilden, dass der Messtaster (T) eine zweite form- und kraftschlüssige Verbindung zwischen dem ersten Gehäuseteil (1) und dem zweiten Gehäuseteil (2) aufweist, und dass die zweite form- und kraftschlüssige Verbindung durch das zweite Nut-Kontur-Paar (20) gebildet wird, und dass die zweite form- und kraftschlüssige Verbindung durch Umformen des zweiten Gehäuseteils (2) erzeugt ist.

5. Messtaster (T) nach Anspruch 4, **dadurch gekennzeichnet, dass** das erste Nut-Kontur-Paar (10) und das zweite Nut-Kontur-Paar (20) auf in einer Höhenrichtung (z) einander gegenüberliegenden Seiten des Messtasters (T) angeordnet sind.

6. Messtaster (T) nach einem der vorhergehenden Ansprüche, **dadurch gekennzeichnet, dass** das erste Gehäuseteil (1) eine im Überlappungsbereich angeordnete Ringnut (4.1) zur Aufnahme eines Dichtmittels (4) umfasst, dass sich die Ringnut (4.1) in einer Umfangsrichtung um das erste Gehäuseteil (1) herum erstreckt, und dass das Dichtmittel (4) zwischen dem ersten Gehäuseteil (1) und dem zweiten Gehäuseteil (2) angeordnet ist.

7. Messtaster (T) nach Anspruch 6, **dadurch gekennzeichnet, dass** die Ringnut (4.1) in Längsrichtung (x) vor oder hinter dem ersten Nut-Kontur-Paar (10) angeordnet ist.

8. Messtaster (T) nach einem der vorhergehenden Ansprüche, **dadurch gekennzeichnet, dass** die erste Kontur (2.1) und/oder die erste Nut (1.1; 1.1'; 1.11) jeweils einen halbrunden, rechteckigen, dreieckigen oder trapezförmigen Querschnitt haben.

9. Messtaster (T) nach einem der vorhergehenden Ansprüche, **dadurch gekennzeichnet, dass** das erste Gehäuseteil (1) und der Schaft (3) stoffschlüssig miteinander verbunden sind.

10. Messtaster (T) nach einem der vorhergehenden Ansprüche, **dadurch gekennzeichnet, dass** die erste Nut (1.1; 1.1`; 1.11) als geschlossene oder offene Nut ausgebildet ist.

11. Verfahren zum Herstellen eines Messtasters (T), mit folgenden Verfahrensschritten:
• Bereitstellen eines ersten Gehäuseteils (1) mit mindestens einer ersten Nut (1.1; 1.1'; 1.11) und eines zweiten Gehäuseteils (2),
• Formschlüssiges Verbinden des ersten Gehäuseteils (1) und des zweiten Gehäuseteils (2) durch Aufstecken des zweiten Gehäuseteils (2) in einer Längsrichtung (x) auf das erste Gehäuseteil (1) derart, dass ein Überlappungsbereich zwischen dem ersten Gehäuseteil (1) und dem zweiten Gehäuseteil (2) ausgebildet wird, und dass die erste Nut (1.1; 1.1'; 1.11) im Überlappungsbereich angeordnet ist, **gekennzeichnet durch**
• Form- und kraftschlüssiges Verbinden des ersten Gehäuseteils (1) und des zweiten Gehäuseteils (2) durch Umformen des zweiten Gehäuseteils (2) derart, dass mindestens eine mit der ersten Nut (1.1; 1.1'; 1.11) korrespondierende erste Kontur (2.1) gebildet wird, und dass die erste Nut (1.1; 1.1'; 1.11) und die erste Kontur (2.1) ein erstes Nut-Kontur-Paar (10) bilden.

12. Verfahren nach Anspruch 11, **dadurch gekennzeichnet, dass** das form- und kraftschlüssige Verbinden derart erfolgt, dass sich die erste Kontur (2.1) in einer Querrichtung (y) in die erste Nut (1.1; 1.1'; 1.11) hinein erstreckt.

13. Verfahren nach Anspruch 11 oder 12, **dadurch gekennzeichnet, dass** das form- und kraftschlüssige Verbinden eine örtliche plastische Werkstoffumformung umfasst.

14. Verfahren nach einem der vorhergehenden Ansprüche, **dadurch gekennzeichnet, dass** das form- und kraftschlüssige Verbinden ein Verpressen oder Durchsetzfügen umfasst.

15. Verfahren nach einem der vorhergehenden Ansprüche, **dadurch gekennzeichnet, dass** das form- und kraftschlüssige Verbinden ein temporäres Einbringen mindestens eines Stempelelements (S; S') zur Erzeugung der ersten Kontur (2.1) umfasst.
